(19) Europäisches Patentamt
European Patent Office
Office européen des brevets

(11) **EP 1 945 074 B1**

(12) **FASCICULE DE BREVET EUROPEEN**

(45) Date de publication et mention
de la délivrance du brevet:
**09.09.2009 Bulletin 2009/37**

(51) Int Cl.:
***A47J 31/54*** *(2006.01)*

(21) Numéro de dépôt: **06820150.8**

(86) Numéro de dépôt international:
**PCT/FR2006/002235**

(22) Date de dépôt: **04.10.2006**

(87) Numéro de publication internationale:
**WO 2007/039683 (12.04.2007 Gazette 2007/15)**

(54) **DISPOSITIF DE CHAUFFAGE DE LIQUIDE POUR APPAREIL ELECTROMENAGER**

VORRICHTUNG ZUM ERHITZEN VON FLÜSSIGKEIT FÜR ELEKTROHAUSHALTSGERÄT

DEVICE FOR HEATING FLUID IN A HOUSEHOLD APPLIANCE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.10.2005 FR 0510239**

(43) Date de publication de la demande:
**23.07.2008 Bulletin 2008/30**

(73) Titulaire: **SEB SA**
**69130 Ecully (FR)**

(72) Inventeur: **MEYER, Pascal**
**14000 Caen (FR)**

(74) Mandataire: **Pichat, Thierry et al**
**Novagraaf Technologies**
**122, rue Edouard Vaillant**
**92593 Levallois-Perret Cedex (FR)**

(56) Documents cités:
**FR-A- 1 471 091        FR-A- 2 855 359**
**US-A- 4 975 559**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne, de façon générale, le domaine des appareils électroménagers. Elle vise plus particulièrement les appareils à usage domestique nécessitant le chauffage d'un liquide à une température inférieure à celle de passage en phase vapeur, et plus particulièrement au chauffage de l'eau. Parmi ces appareils, on peut citer les cafetières électriques, les machines espresso, les distributeurs de boissons chaudes nécessitant la production rapide d'une eau à une température supérieure à 60° et inférieure à la température d'ébullition du liquide.

Plus particulièrement, l'invention concerne un dispositif de chauffage d'un liquide pour appareil électroménager, comportant un corps principal, associé à un élément complémentaire recouvrant une face du corps principal, en créant entre l'élément complémentaire et le corps principal un canal de circulation de liquide présentant deux extrémités formant respectivement une entrée adaptée pour être reliée à un réservoir de liquide et une sortie adaptée pour l'évacuation du liquide chauffé, ledit élément complémentaire présentant une résistance chauffante disposée pour permettre le chauffage de liquide transitant le long du canal.

Afin de réduire le temps nécessaire pour chauffer une quantité donnée de liquide à une température donnée, des fabricants de dispositifs de chauffage de liquide ont développé des dispositifs de chauffage avec différentes architectures pour agencer le canal de circulation de liquide par rapport à la résistance chauffante.

Il est connu du document FR-A-2 855 359 un dispositif de chauffage de liquide du type précédemment défini et doté d'un corps principal ayant une faible inertie thermique, inférieure à celle de l'aluminium. Ce dispositif est particulièrement avantageux car du fait de sa faible inertie, le corps principal emmagasine une très faible quantité de la chaleur produite par la résistance. Le rendement thermique de ce dispositif de chauffe est ainsi amélioré en réduisant les pertes thermiques.

Toutefois, à température supérieure à 80°C et avec un débit d'eau normal désiré, on constate l'apparition de bulles de vapeur dans la section de sortie du canal qui, à la longue, arrive à attaquer la matière plastique du corps principal portant le canal. La longévité de l'appareil est alors fortement réduite. Il est alors nécessaire d'utiliser des plastiques techniques beaucoup plus chers. De plus un tel dispositif a tendance à s'entartrer, ce qui dégrade son rendement énergétique au fur et à mesure des cycles d'utilisation. Un dispositif de chauffage d'un liquide est également décrit par le document brevet DE 10322034.

Dans ce contexte, la présente invention a pour but de proposer un dispositif de chauffage permettant de pallier certains au moins des inconvénients précédemment cités et en particulier ayant une moindre tendance à s'entartrer lors du chauffage de liquide à des températures proches de l'ébullition. A cette fin, le dispositif de l'invention, par ailleurs conforme à la définition générique qu'en donne le préambule énoncé précédemment, est essentiellement **caractérisé en ce que** ledit canal possède une section minimale de passage de liquide située à distance de ladite sortie et à plus grande proximité de la sortie du canal que de son entrée.

Grâce à l'invention, entre la section minimale du canal et l'entrée, la vitesse de circulation du liquide est relativement lente ce qui permet son chauffage progressif sur une longueur du canal importante (au moins égale à la longueur du canal). Puis, à l'endroit de la section minimale et à flux de liquide constant, la vitesse de circulation du liquide augmente en raison du rétrécissement lié à la section minimale.

L'endroit du rétrécissement formé dans le canal est choisi pour être positionné dans une zone chaude du canal, c'est-à-dire à proximité de sa sortie. C'est en effet dans la zone chaude que se forment les bulles de vapeur et que se dépose le tartre. En accélérant la vitesse du liquide dans la zone chaude du canal, on augmente alors la pression du liquide contre les parois chaudes du canal ce qui entraîne une réduction de la quantité de vapeur générée et / ou une évacuation plus rapide de ces bulles de vapeur qui deviennent moins agressives pour le matériau.

L'augmentation de la vitesse de l'eau en zone chaude du canal, s'accompagne d'une réduction de la quantité de tartre se déposant sur les parois du canal.

De plus, l'échange thermique entre les parois du canal et le liquide est amélioré car il y a une meilleure conduction thermique avec une interface liquide / paroi qu'avec une interface vapeur / paroi.

Grâce à l'invention, la température à laquelle se crée la vapeur dans le canal est augmentée par rapport à ce qu'elle est dans le cas d'un dispositif de chauffage ne disposant pas de section minimale formant un rétrécissement du canal en zone chaude. On peut donc augmenter la puissance de chauffe de la résistance électrique sans pour autant générer plus de vapeur que dans les dispositifs de l'art antérieur. De ce fait, la vitesse de chauffe du liquide peut être augmentée sans pour autant générer une zone d'entartrement.

On peut par exemple faire en sorte que le dispositif comporte une portion de canal se rétrécissant progressivement en s'approchant de la sortie du canal, cette portion de rétrécissement étant située à plus grande proximité de la sortie du canal que de son entrée, entre ladite section minimale de passage de liquide et ladite entrée du canal.

Cette zone de rétrécissement progressive est destinée :

- d'une part à réduire les pertes de charge générées par la présence de la section minimale et ;
- d'autre part à augmenter progressivement la pression statique interne du canal et la vitesse du liquide en se rapprochant de la section minimale.

De ce fait, et pour les mêmes raisons que celles énoncées ci-dessus, la température de la zone de rétrécissement progressive peut, en moyenne, être augmentée sans créer pour autant une zone de génération de vapeur.

On peut par exemple faire en sorte que la section minimale appartienne à une portion de canal de section minimale constante sur toute sa longueur, cette portion de canal de section minimale constante étant immédiatement consécutive à ladite portion de rétrécissement.

Dans ce mode de réalisation, en se dirigeant vers la sortie du canal, la section du canal se rétrécie progressivement le long de la portion de rétrécissement jusqu'à devenir minimale et constante sur toute la longueur de la portion de canal de section minimale.

Oh peut également faire en sorte que la résistance chauffante soit sérigraphiée sur une face de l'élément complémentaire opposée au corps principal. Ce mode de réalisation permet un échange thermique optimum entre la résistance et l'élément complémentaire, ce qui améliore d'autant le rendement du dispositif.

On peut également faire en sorte que la distance séparant ladite section minimale du canal de la sortie soit d'au moins un dixième de la longueur totale du canal mesurée entre son entrée et sa sortie. Ce mode de réalisation permet de réduire la pression exercée par le liquide chauffé sur la paroi du canal à proximité de la sortie qui est une zone légèrement refroidie du fait de la proximité de la sortie avec l'extérieur du dispositif. Cet élargissement de la section du canal à proximité de la sortie est adapté de manière à ne pas créer de zone favorisant l'apparition de vapeur par cavitation.

On peut également faire en sorte que la section minimale soit inférieure à la moitié d'une section de passage maximale du fluide dans le canal, préférentiellement inférieure à un quart de cette section maximale et préférentiellement inférieure à un cinquième de cette section maximale. A température constante, la vitesse du liquide à un endroit donné du canal est inversement proportionnelle à la section du canal à cet endroit.

Ainsi, on fera en sorte d'ajuster le profil du canal pour optimiser la courbe de montée en température du liquide lors de son écoulement dans le canal de telle façon que l'on évite le passage en phase vapeur du liquide. Dans le cadre de cet ajustement du profil, il a été constaté que la section minimale doit être au moins égale à la moitié de la section maximale et préférentiellement égale au cinquième de cette section maximale ce qui permet d'avoir les conditions idéales pour entraîner d'éventuelles particules de tartre qui se formeraient le long du canal, à proximité des zones à section rétrécie.

On peut également faire en sorte que la distance existant entre l'élément complémentaire et le corps principal, sur toute la longueur du canal, soit minimale à l'endroit de ladite section minimale de passage du liquide.

Cette distance entre l'élément complémentaire et le corps principal correspond à la profondeur du canal. Plus la profondeur du canal est faible et plus le fluide aura tendance à être mis en pression contre l'élément complémentaire, favorisant ainsi l'échange thermique à cet endroit en évitant d'y créer de la vapeur.

On peut également faire en sorte que l'élément complémentaire soit un tube à l'intérieur duquel est disposé le corps principal et que le canal soit de forme hélicoïdale enroulée autour du corps principal, les spires de cette hélicoïde les plus rapprochées les unes des autres étant celles situées à proximité de l'endroit où se trouve ladite section minimale.

Grâce à l'élément complémentaire tubulaire et au canal en forme hélicoïdale, on réduit les pertes thermiques du fait de l'accumulation concentrique de chaleur vers l'intérieur de l'élément complémentaire. Le rapprochement des spires à proximité de l'endroit où se trouve la section minimale est avantageux car cela renforce mécaniquement la structure de l'hélicoïde qui est plus résistante dans sa zone chaude (zone située à plus grande proximité de la sortie que de l'entrée) que dans sa zone froide (zone située à plus grande proximité de l'entrée que de la sortie). Ce renforcement local de la structure hélicoïdale permet au dispositif de l'invention de chauffer un liquide tel que de l'eau, à plus de 90°C avec une pression de service supérieure à un bar (entre 2 et 20 bars) et avec un débit de liquide chauffé de l'ordre de 500 ml/min. Les capacités du dispositif de l'invention sont au-dessus des capacités classiques des dispositifs usuels utilisés dans des appareils de boissons instantanées.

Alternativement, on peut faire en sorte que le corps principal soit plat et que le canal soit en forme de spirale plane. Ce mode de réalisation peut être utilisé pour certains appareils nécessitant des dispositifs de chauffage plans pour des questions d'encombrement. Dans ce mode de réalisation, il est également possible de former la section de passage minimale en rapprochant les spires les unes des autres pour réduire progressivement la section du canal plan jusqu'à atteindre la section minimale. L'entrée de ce dispositif peut se trouver au centre de la spirale et la sortie à la périphérie ou inversement. Dans tous les cas, on fera en sorte que la section minimale soit située à plus grande proximité de la sortie que de l'entrée en jouant par exemple sur l'écartement relatif entre deux spires consécutives de la spirale et/ou en jouant sur la profondeur du canal comme énoncé précédemment.

On peut également faire en sorte que le canal soit formé par une rainure pratiquée dans ledit corps principal.

D'autres caractéristiques et avantages de l'invention ressortiront clairement de la description qui en est faite ci-après, à titre indicatif et nullement limitatif, en référence aux dessins annexés, dans lesquels:

la figure 1 représente une vue en perspective éclatée du dispositif de chauffage conforme à l'invention ;
la figure 2 représente une vue en coupe longitudinale du dispositif de chauffage de la figure 1 ;
la figure 3 représente une vue en coupe longitudinale du seul corps principal monté dans le dispositif des figures 1 et 2.

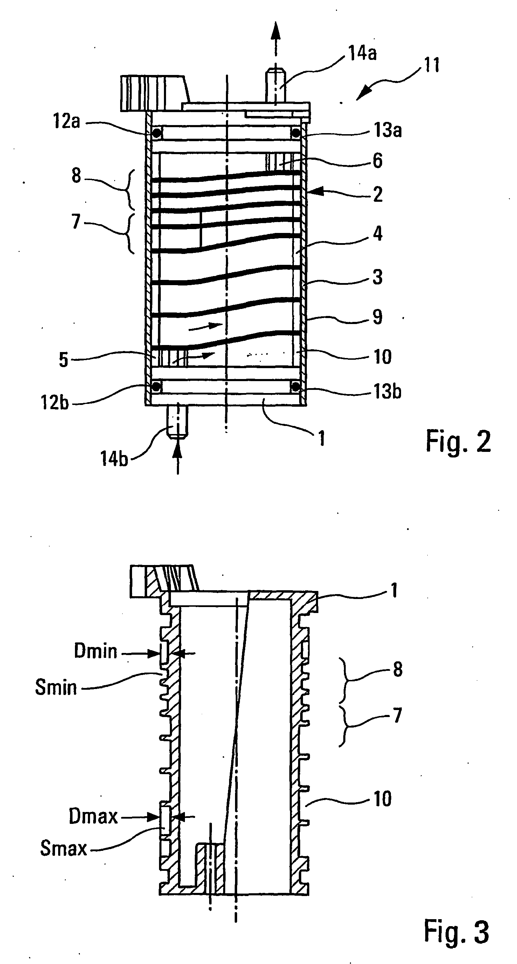

Comme annoncé précédemment, l'invention concerne un dispositif de chauffage de liquide. Ce dispositif comporte un corps principal 1 de forme sensiblement cylindrique, et un élément complémentaire 3 de forme tubulaire portant une résistance chauffante 2. Le corps principal 1 est dimensionné pour être inséré dans l'élément complémentaire 3 format un manchon. Une zone d'étanchéité entre le corps principal et l'élément complémentaire est formée à chaque extrémité du tube 3. Ces zones d'étanchéité sont visibles sur la figure 2 où des joints toriques 12a, 12b insérés dans des gorges annulaires 13a, 13b du corps principal 1 sont en appui contre une face interne de l'élément complémentaire 3.

Un canal 4 est formé entre ces zones d'étanchéité et entre la face interne de l'élément complémentaire 3 et le corps principal 1. Ce canal 4 est l'espace existant entre le corps principal 1 et l'élément complémentaire 3, et s'étendant entre l'entrée du canal et sa sortie. Une rainure hélicoïdale 10 enroulée autour du corps principal 1, selon l'axe longitudinal du corps, donne au canal 4 sa forme sensiblement hélicoïdale.

Une première extrémité de cette rainure 10 débouche dans une première ouverture formant la sortie 6 communiquant avec l'extérieur du dispositif par un premier tube 14a.

Une seconde extrémité de cette rainure 10 débouche dans une seconde ouverture formant l'entrée 5 et communiquant avec l'extérieur du dispositif par un second tube 14b.

Chacun de ces tubes 14a et 14b s'étend vers l'extérieur du dispositif pour être relié à un circuit d'eau de l'appareil de chauffage. Typiquement, le second tube 14b est relié à un réservoir d'alimentation en eau froide et le premier tube 14a est relié à un distributeur d'eau chaude doté d'un robinet. L'écoulement du liquide peut se faire soit par gravité en plaçant le réservoir au-dessus du dispositif de chauffage, soit par écoulement forcé à l'aide d'une pompe placée entre le réservoir d'eau froide et le dispositif 11.

La rainure formée sur le corps principal pour définir le canal 4 possède une profondeur et une largeur variables selon l'endroit où l'on se trouve dans le canal 4.

Le canal possède essentiellement quatre portions successives dans le sens de l'écoulement du liquide.

Une première portion de canal dans laquelle débouche l'entrée 5 possède une section de passage de fluide maximale Smax (visible sur la figure 3). Cette section maximale est la plus importante de toute la longueur du canal 4.

Une seconde portion 7 du canal est définie immédiatement en aval de la première portion pour permettre un rétrécissement progressif de la section de passage de fluide du canal. Cette seconde portion 7 est nommée portion de rétrécissement.

Une troisième portion 8 du canal est définie immédiatement en aval de la seconde portion pour définir une section de circulation de liquide minimale Smin, où Smin est la section de passage de fluide la plus petite de toute la longueur du canal.

Une quatrième section du canal immédiatement en aval de la troisième portion relie cette troisième portion à la sortie en élargissant progressivement la section de passage de fluide.

En terme de pourcentage de la longueur totale du canal :

- la première portion de canal représente entre 35% et 50% de cette longueur totale ;
- la seconde portion représente entre 15% et 30 % de cette longueur totale ;
- la troisième portion de canal représente entre 15% et 40% de cette longueur totale;
- la quatrième portion représente entre 5% et 20% de cette longueur totale.

Dans le cas illustré, la première portion représente 50% de la longueur totale du canal, la portion de rétrécissement 7 environ 15% de cette longueur, la portion de canal de section minimale 8 environ 25% et la quatrième portion environ 10%.

Dans ce même mode de réalisation, la section minimale constante de passage Smin est 4 fois plus petite que la section maximale Smax ce qui permet une augmentation de facteur 4 de la vitesse du fluide. Ceci permet d'éviter la création de bulles dans le canal et augmente l'échange thermique entre le liquide et l'élément complémentaire qui porte la résistance chauffante 2. Le canal est prévu pour faciliter l'évacuation de bulles qui sont nuisibles au bon échange thermique.

Afin de créer la variation de section dans le canal on fait varier la profondeur de la rainure et sa largeur. Ainsi, à l'endroit de la section de passage maximale, le canal aune largeur d'environ 4 mm et une profondeur Dmax de 3 mm créant une section maximale de 12 mm2.

A l'endroit de la section minimale de passage, la largeur du canal est d'environ 1, 5 mm et sa profondeur Dmin est d'environ 2 mm créant une section minimale de 3 mm2.

Entre ses sections minimale et maximale, le canal est conformé pour que sa largeur et sa profondeur évoluent selon une courbe régulière, progressive et sans discontinuité, ce qui réduit les pertes de charges.

Comme indiqué précédemment, la résistance de chauffe 2 sérigraphiée est formée sur la face 9 de l'élément complémentaire 3 qui est opposée au corps principal 1.

Cette résistance 2 est adaptée pour fournir une puissance de chauffe régulièrement répartie et homogène sur toute la longueur du canal 4 afin de permettre au liquide s'écoulant dans le canal de chauffer tout au long de son transit. La résistance 2 chauffe de façon sensiblement homogène sur toute sa longueur.

La résistance 2 est composée de deux circuits résistifs 2a, 2b montés en parallèle entre deux bornes d'alimentation 15a, 15b également sérigraphiées. Ces circuits résistifs sont enroulés en hélicoïde sur la face 9 de l'élément complémentaire et les bornes 15a, 15b sont disposées pour permettre un contact électrique avec des lames métalliques typiquement en cuivre.

Pour créer cette résistance, on sérigraphie une ou plusieurs couches de matériau isolant sur l'élément complémentaire, puis une couche de pâte conductrice selon un chemin particulier, et une couche pour former les bornes d'alimentation 15a, 15b, et enfin une ou plusieurs couches de matériau isolant. La puissance de chauffe disponible peut être de l'ordre de 2000W.

Dans un mode de réalisation préférentiel, on réduit au maximum l'épaisseur de l'élément complémentaire en forme de manchon pour favoriser les transferts thermiques par conduction de la résistance vers le liquide du canal. On choisira pour réaliser l'élément complémentaire un matériau ayant un fort coefficient de conduction thermique, par exemple supérieur à 40. Par coefficient de conduction thermique (Cth) on entend le rapport de la valeur du coefficient de conductibilité thermique (λ) du matériau de l'élément complémentaire que divise la valeur de son épaisseur (e) exprimée en millimètres.

$$Cth = \lambda/e$$

En d'autres termes, l'élément complémentaire transmet très rapidement par conduction l'énergie calorifique de la résistance chauffante au liquide car son épaisseur est très réduite, de l'ordre de 1 à 3 millimètres, et car son matériau constitutif qui est de l'aluminium, du cuivre ou de l'acier inoxydable, a un fort coefficient de conductibilité.

Dans un mode de réalisation préférentiel, le corps principal est réalisé dans une matière plastique ou plus généralement dans un matériau possédant une faible inertie thermique Ith, en tout cas inférieure à celle de l'aluminium qui est de l'ordre de 2,30, de manière à n'emmagasiner qu'une faible partie de l'énergie de chauffage. Comme matériau susceptible de bien convenir dans la réalisation du corps principal 1 selon l'invention, on peut citer le polyamide (Ith = 1,9), le polyacétal (Ith = 2), le polypropylène (Ith = 1,6), le polysulfone (Ith = 1,4) ou le polycarbonate (Ith = 1,5).

Grâce à l'invention, la zone chaude du corps principal qui est une zone critique de conception, est rendue plus résistante mécaniquement du fait de la faible largeur du canal et de la plus grande densité surfacique des ailettes formant la rainure. Il est à noter que ces ailettes peuvent être plus larges dans la zone chaude, à proximité de la sortie du canal, que dans le reste du dispositif. Cette nouvelle forme de canal permet également un meilleur échange thermique avec l'eau du canal et donc un sensible refroidissement au niveau du corps principal dans la zone la plus chaude.

De ce fait, le corps principal qui est généralement réalisé en PPS alimentaire résistant mécaniquement mais coûteux, peut être maintenant réalisé en polyamide chargé dont la résistance mécanique est plus faible mais dont le coût est réduit.

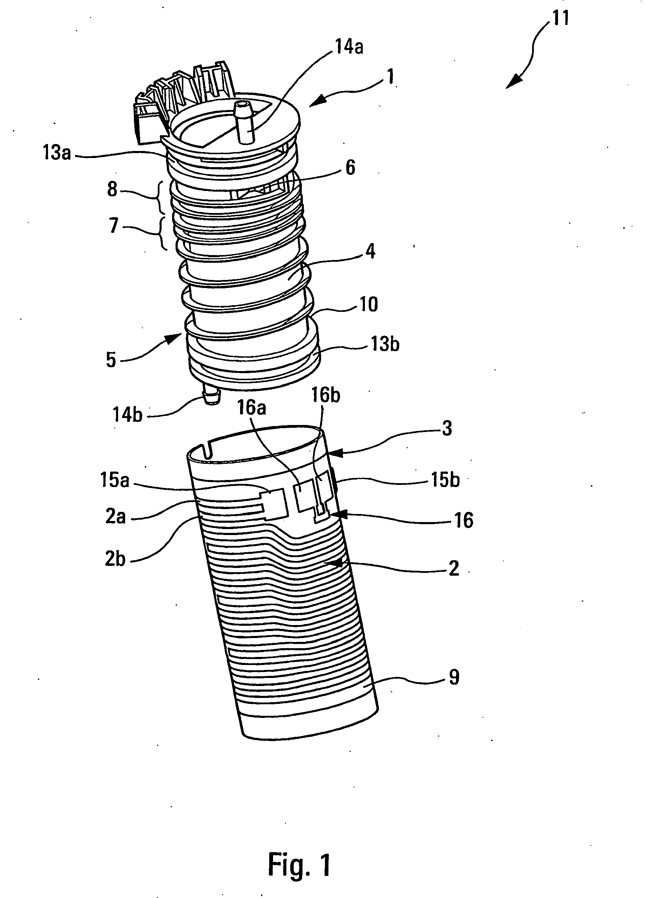

Utilement, un capteur de température 16 tel qu'une résistance CTN, visible sur la figure 1, est rapporté contre la face 9 de l'élément complémentaire et est branché à un circuit électronique par l'intermédiaire de deux bornes 16a, 16b. Ce circuit électronique pilote l'alimentation électrique des pistes résistives, de sorte que l'élément complémentaire est maintenu à une température prédéterminée en période de circulation d'eau.

Dans un mode particulier, on peut faire en sorte de créer une zone fusible dans la résistance, à la surface de l'élément complémentaire. Ainsi, en cas de surchauffe de la résistance, la zone fusible fond, interrompant ainsi l'alimentation de la résistance et coupant le chauffage.

Typiquement, l'utilisateur met en marche le dispositif de chauffage à l'aide d'une commande ce qui entraîne la mise en circulation de liquide dans le canal et la chauffe de la résistance. Grâce à l'invention, la pente d'augmentation de température à l'intérieur du canal est de l'ordre de 30°C par seconde contre 5°C par seconde mesuré sur certains dispositifs de l'art antérieur. Ainsi, la préchauffe du dispositif de chauffage est très rapide et le liquide chauffé entre 80 et 99°C peut être délivré en quelques secondes de façon stable. Avec le dispositif de l'invention, il peut également être envisagé de produire de la vapeur humide, voire sèche de manière stable, en régulant le débit de liquide et la puissance de chauffe.

**Revendications**

1. Dispositif de chauffage (11) d'un liquide pour appareil électroménager, le dispositif comportant un corps principal (1) et un élément complémentaire (3) disposé en regard d'une face du corps principal (1), un canal de circulation de liquide (4) existant entre l'élément complémentaire (3) et le corps principal (1), ledit canal présentant deux extrémités formant respectivement une entrée (5) adaptée pour être reliée à un réservoir de liquide et une sortie (6) adaptée pour l'évacuation du liquide chauffé, l'élément complémentaire (3) étant pourvu d'une résistance chauffante (2) disposée pour permettre le chauffage du liquide transitant le long du canal (4), ledit canal (4) possédant une section délimitée en profondeur par le corps principal (1) et l'élément complémentaire (3) et en largeur par au moins une ailette s'étendant du corps principal (1) à l'élément complémentaire (3), **caractérisé en ce que** le canal a une section minimale (Smin) de passage de liquide située à distance de ladite sortie (6) et à plus grande proximité de la sortie (6) du canal que de son entrée (5).

**2.** Dispositif selon la revendication 1, **caractérisé en ce qu'**il comporte une portion rétrécissement de canal (7) située à plus grande proximité de la sortie (6) du canal que de son entrée (5), entre ladite section minimale de passage de liquide (Smin) et ladite entrée (5) du canal.

**3.** Dispositif selon la revendication 2, **caractérisé en ce que** la portion de rétrécissement (7) se rétrécie (7) progressivement en direction de la sortie (6) du canal.

**4.** Dispositif selon la revendication 3, **caractérisé en ce que** la section minimale (Smin) appartient à une portion de canal de section minimale constante (8) sur toute sa longueur, cette portion de canal de section minimale constante (8) étant immédiatement consécutive à ladite portion de rétrécissement (7).

**5.** Dispositif selon l'une quelconque des revendications 1 à 4, **caractérisé en ce que** la résistance chauffante (2) est sérigraphiée sur une face (9) de l'élément complémentaire (3) opposée au corps principal (1).

**6.** Dispositif selon l'une quelconque des revendications 1 à 5, **caractérisé en ce que** la distance séparant ladite section minimale du canal de la sortie est d'au moins un dixième de la longueur totale du canal mesurée entre son entrée (5) et sa sortie (6).

**7.** Dispositif selon l'une quelconque des revendications précédentes, **caractérisé en ce que** la section minimale (Smin) est inférieure à la moitié d'une section de passage maximale du fluide (Smax) dans le canal, préférentiellement inférieure à un quart de cette section maximale (Smax) et préférentiellement inférieure à un cinquième de cette section maximale (Smax).

**8.** Dispositif selon l'une quelconque des revendications 1 à 7, **caractérisé en ce que** la distance existant entre l'élément complémentaire (3) et le corps principal (1), sur toute la longueur du canal, est minimale (Dmin) à l'endroit de ladite section minimale de passage du liquide (Smin).

**9.** Dispositif selon l'une quelconque des revendications 1 à 8, **caractérisé en ce que** ledit élément complémentaire (3) est un tube à l'intérieur duquel est disposé le corps principal (1) et **en ce que** ledit canal (4) est de forme hélicoïdale enroulée autour du corps principal (1).

**10.** Dispositif selon la revendication 9, **caractérisé en ce que** les spires de ladite hélicoïde les plus rapprochées les unes des autres sont celles situées à proximité de l'endroit où se trouve ladite section minimale (Smin).

**11.** Dispositif selon l'une quelconque des revendications 1 à 8, **caractérisé en ce que** le corps principal (1) est plat et le canal est en forme de spirale plane.

**12.** Dispositif selon l'une quelconque des revendications 1 à 11, **caractérisé en ce que** le canal (4) est formé par une rainure (10) pratiquée dans ledit corps principal (1).

**Claims**

**1.** Device (11) for heating a liquid for a domestic electrical appliance, the device comprising a main body (1) and a complementary element (3) disposed opposite a face of the main body (1), a liquid circulation channel (4) existing between the complementary element (3) and the main body (1), the said channel having two ends forming respectively an inlet (5) adapted to be connected to a liquid reservoir and an outlet (6) adapted for the discharge of the heated liquid, the complementary element (3) being provided with a heating element (2) disposed so as to allow the heating of the liquid passing along the channel (4), the said channel (4) having a section delimited, in depth, by the main body (1) and a complementary element (3) and, in width, by at least one fin extending from the main body (1) to the complementary element (3), **characterised in that** the channel has a minimum cross section (Smin) of liquid flow situated at a distance from the said outlet (6) and closer to the outlet (6) of the channel than its inlet (5).

**2.** Device according to claim 1, **characterised in that** it comprises a channel narrowing portion (7) situated closer to the outlet (6) of the channel that its inlet (5), between the said minimum cross section of liquid flow (Smin) and the said inlet (5) of the channel.

**3.** Device according to claim 2, **characterised in that** the narrowing portion (7) narrows (7) progressively in the direction of the outlet (6) of the channel.

**4.** Device according to claim 3, **characterised in that** the minimum cross section (Smin) belongs to a channel portion with a minimum cross section (8) constant over its entire length, this channel portion with a constant minimum cross section (8) following on immediately from the said narrowing portion (7).

**5.** Device according to any one of claims 1 to 4, **characterised in that** the heating element (2) is screen printed on a face (9) of the complementary element (3) opposite to the main body (1).

**6.** Device according to any one of claims 1 to 5, **characterised in that** the distance separating the said minimum cross section of the channel from the outlet is at least one tenth of the total length of the channel measured between its inlet (5) and its outlet (6).

**7.** Device according to any one of the preceding claims, **characterised in that** the minimum cross section (Smin) is less than half of a maximum cross section of flow of the fluid (Smax) in the channel, preferentially less than one quarter of this maximum cross section (Smax) and preferentially less than one fifth of this maximum cross section (Smax).

**8.** Device according to any one of claims 1 to 7, **characterised in that** the distance existing between the complementary element (3) and the main body (1), over the entire length of the channel, is minimum (Dmin) at the point of the said minimum cross section of flow of the liquid (Smin).

**9.** Device according to any one of claims 1 to 8, **characterised in that** the said complementary element (3) is a tube inside which the main body (1) is disposed and **in that** the said channel (4) is helicoidally shaped wound around the main body (1).

**10.** Device according to claim 9, **characterised in that** the turns of the said helicoid closest to one another are those situated close to the point where the said minimum cross section (Smin) is situated.

**11.** Device according to any one of claims 1 to 8, **characterised in that** the main body (1) is flat and the channel is in the form of flat spiral.

**12.** Device according to any one of claims 1 to 11, **characterised in that** the channel (4) is formed by a groove (10) made in the said main body (1).

**Patentansprüche**

**1.** Vorrichtung zum Erwärmen von Flüssigkeit für ein Elektrohaushaltsgerät, umfassend einen Hauptkörper (1) und ein Zusatzteil (3), das im Abstand zu einer Fläche des Hauptkörpers (1) angeordnet ist, wobei ein Flüssigkeitsdurchflusskanal (4) zwischen dem Zusatzteil (3) und dem Hauptkörper (1) angeordnet ist, welcher Kanal (4) zwei Endstücke aufweist, die jeweils einen Eingang (5) zur Verbindung mit einem Flüssigkeitsreservoir und einen Ausgang (6) zur Evakuierung der erwärmten Flüssigkeit bilden, wobei das Zusatzteil (3) mit einem Heizwiderstand (2) zur Erwärmung der entlang des Kanals (4) fließenden Flüssigkeit versehen ist, wobei der Kanal (4) einen Abschnitt aufweist, der in der Tiefe durch den Hauptkörper (1) und das Zusatzteil (3), und in der Breite durch mindestens eine Rippe begrenzt wird, die sich vom Hauptkörper (1) zum Zusatzteil (3) erstreckt, **dadurch gekennzeichnet, dass** der Kanal einen minimalen Durchlassquerschnitt (Smin) im Abstand zu dem Ausgang (6) und näher am Ausgang (6) des Kanals als an dessen Eingang (5) aufweist.

**2.** Vorrichtung nach Anspruch 1, **dadurch gekennzeichnet, dass** der Kanal (7) einen Verjüngungsabschnitt aufweist, der näher am Ausgang (6) des Kanals als an dessen Eingang (5) zwischen dem minimalen Durchlassquerschnitt (Smin) und dem Eingang (5) des Kanals liegt.

**3.** Vorrichtung nach Anspruch 2, **dadurch gekennzeichnet, dass** der Verjüngungsabschnitt (7) sich fortschreitend in Richtung des Ausgangs (6) verjüngt.

**4.** Vorrichtung nach Anspruch 3, **dadurch gekennzeichnet, dass** der minimale Durchlassquerschnitt (Smin) zu einem auf seiner ganzen Länge konstanten minimalen Querschnitt (8) aufweisenden Abschnitt des Kanals gehört, wobei sich der Abschnitt des Kanals mit konstantem minimalen Querschnitt (8) direkt an den Verjüngungsabschnitt (7) anschließt.

**5.** Vorrichtung nach irgendeinem der Ansprüche 1 bis 4, **dadurch gekennzeichnet, dass** der Heizwiderstand (2) im Siebdruckverfahren auf eine dem Hauptkörper (1) abgewandte Seite (9) des Zusatzteils (3) aufgebracht ist.

**6.** Vorrichtung nach irgendeinem der Ansprüche 1 bis 5, **dadurch gekennzeichnet, dass** die Entfernung zwischen dem Minimalquerschnitt des Kanals und dem Ausgang mindestens ein Zehntel der Gesamtlänge des Kanals beträgt, gemessen zwischen dessen Eingang (5) und dessen Ausgang (6).

**7.** Vorrichtung nach irgendeinem der vorstehenden Ansprüche, **dadurch gekennzeichnet, dass** der minimale Durchlassquerschnitt (Smin) weniger als halb so groß ist wie ein maximaler Durchlassquerschnitt (Smax) des Kanals, vorzugsweise kleiner als ein Viertel dieses maximalen Querschnittes (Smax) und vorzugsweise kleiner als ein Fünftel dieses Maximalquerschnittes (Smax).

**8.** Vorrichtung nach irgendeinem der Ansprüche 1 bis 7, **dadurch gekennzeichnet, dass** der Abstand zwischen dem Zusatzteil (3) und dem Hauptkörper (1) auf der gesamten Länge des Kanals dort am kleinsten ist (Dmin), wo sich der minimale Durchlassquerschnitt (Smin) befindet.

9. Vorrichtung nach irgendeinem der Ansprüche 1 bis 8, **dadurch gekennzeichnet, dass** das Zusatzteil (3) ein Rohr ist, in dem sich der Hauptkörper (1) befindet, und dass der Kanal (4) schraubenförmig um den Hauptkörper (1) aufgerollt ist.

10. Vorrichtung nach Anspruch 9, **dadurch gekennzeichnet, dass** die am dichtesten beieinander liegenden Spiralen der Schraubenform diejenigen sind, die sich ungefähr am Ort des minimalen Durchlassquerschnittes (Smin) befinden.

11. Vorrichtung nach irgendeinem der Ansprüche 1 bis 8, **dadurch gekennzeichnet, dass** der Hauptkörper (1) flach ist und dass der Kanal die Form einer ebenen Spirale hat.

12. Vorrichtung nach irgendeinem der Ansprüche 1 bis 11, **dadurch gekennzeichnet, dass** der Kanal (4) durch eine Rille (10) geformt ist, die in den Hauptkörper (1) eingearbeitet ist.

Fig. 1

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2855359 A
- DE 10322034